**Europäisches Patentamt**

**European Patent Office**

**Office européen des brevets**

(19)

(11) Veröffentlichungsnummer : **0 078 909 B2**

# (12) NEUE EUROPÄISCHE PATENTSCHRIFT

(45) Veröffentlichungstag der neuen Patentschrift :
**30.09.92 Patentblatt 92/40**

(51) Int. Cl.$^5$ : **C01B 33/193**

(21) Anmeldenummer : **82108893.7**

(22) Anmeldetag : **25.09.82**

(54) **Fällungskieselsäure mit hoher Struktur und Verfahren zu ihrer Herstellung.**

Die Akte enthält technische Angaben, die nach dem Eingang der Anmeldung eingereicht wurden und die nicht in dieser Patentschrift enthalten sind.

(30) Priorität : **07.11.81 DE 3144299**

(43) Veröffentlichungstag der Anmeldung :
**18.05.83 Patentblatt 83/20**

(45) Bekanntmachung des Hinweises auf die
Patenterteilung :
**23.04.86 Patentblatt 86/17**

(45) Bekanntmachung des Hinweises auf die
Entscheidung über den Einspruch :
**30.09.92 Patentblatt 92/40**

(84) Benannte Vertragsstaaten :
**AT BE CH DE FR GB IT LI NL SE**

(56) Entgegenhaltungen :
**DE-A- 1 567 627**
**DE-A-15 179 00**
**DE-B- 1 299 617**
**DE-B- 1 467 019**
**DE-B- 2 414 478**
**DE-B- 2 522 486**
**DE-C- 1 036 220**
**DE-C- 1 767 332**
**DE-C- 2 447 613**
**FR-A- 1 481 968**

(56) Entgegenhaltungen :
**GB-A- 745 890**
**GB-A- 883 863**
**JP-A- 7 436 876**
**JP-A-77 126 695**
**US-A- 2 765 242**
**US-A- 4 029 514**
**US-A- 4 067 954**
**Grace. "Syloid agent de matage pour revetements des surfaces" 1981.**
**Chemical abstracts 92:113 105ff**
**Santocel. Technical Bulletin I-263**
**Untersuchungsbefund nr. 11 442. Degussa.**
**R:K: Iler. "The chemistry of Silica" pp 174 & 493**
**Ullmanns Enzyk. der Technischen Chemie. Band 21. 4.Auflage s. 465**
**Kolloidnyl Zhurnal vol. 27 no. 6. vol.27 no 6 pp 916-920 English translation**
**DIN 53601**

(73) Patentinhaber : **Degussa Aktiengesellschaft**
**Weissfrauenstrasse 9**
**W-6000 Frankfurt am Main 1 (DE)**

(72) Erfinder : **Nauroth, Peter**
**Germanusstrasse 8**
**W-5047 Wesseling (DE)**
Erfinder : **Esch, Heinz**
**Bonner Strasse 425**
**W-5047 Wesseling-Urfeld (DE)**
Erfinder : **Türk, Günter, Dr.**
**Liesingstrasse 3**
**W-6450 Hanau 9 (DE)**

## Beschreibung

Unter der Struktur einer Kieselsäure ist ihre Eigenschaft zu verstehen, die den Grad und das Ausmass der Zusammenlagerung ihrer Primärteilchen zu Sekundärteilchen, bzw. zu Tertiäraggregaten beschreibt. Nach heute gültigen Überlegungen, die die Charakterisierung der Struktur von Furnace-Russen betreffen, lässt sich durch die Anwendung der Methode der Brabender Absorptionszahl nach CABOT auf Fällungskieselsäuren ein eindeutiger Zusammenhang zwischen der sogenannten Dibutylphthalat-Absorptionszahl (in ml/g oder %) und den Struktureigenschaften aufzeigen (vgl. DE-C 1 767 332, Spalte 2, Zeilen 45-64).

Als Stand der Technik sind Kieselsäuretypen bekannt, die sich im Hinblick auf ihre Struktur von den normalen Kieselsäuren (Verstärkerfüllstoffe für Gummi) mit durchschnittlichem Strukturmass unterscheiden.

Es handelt sich hierbei um gefällte Kieselsäuren oder Kieselsäuregele, bei denen durch besondere Varianten des Trocknungsprozesses Produkte gebildet werden, deren Struktur als erhöht anzusehen ist. Hierzu gehören die Aerogele (Ullmanns Enzyklopädie der technischen Chemie, III. Auflage, Band 15, Seite 725/1949), die durch überkritische Entwässerung von Kieselsäure-Organo-Hydrogelen (US-A 2 245 767) bzw. durch Strahlmahltrocknung von Kieselsäurehydrogelen (DE-C 1 036 220) gewonnen werden. Ferner sind diejenigen Kieselsäuren und Kieselsäuregele, deren intermiscellare Flüssigkeit vor dem Trocknungsschritt aus organischen Lösungsmitteln bzw. Gemischen solcher Lösungsmittel mit Wasser besteht (US-A 2 285 449, DE-B 1 008 717, DE-C 1 089 736), dieser Gruppe zuzurechnen. Des weiteren zählen dazu auch sprühgetrocknete Kieselsäuren (NL-A 6 502 791, DE-C 2 447 613) und schliesslich die durch Scherung erhaltenen Fällungskieselsäuren (DE-A F 14 059 VI C/12i, DE-B 1 000 793, DE-C 1 767 332).

Die nachfolgende Zusammenstellung (Tabelle 1) enthält eine vergleichende Übersicht über die Produkte des Standes der Technik im Vergleich zur « normalen » Fällungskieselsäure mit mittlerer Struktur. Der Übersicht sind zusätzlich die Daten von drei verschiedenen erfindungsgemässen Kieselsäuren beigefügt. Der Vergleich des Zahlenmaterials führt zu der Feststellung, dass es erfindungsgemäss überraschenderweise gelungen ist, hochstrukturierte Fällungskieselsäuren mit einer Oberfläche von mehr als 400 m²/g in Kombination mit einer DBP-Zahl von mehr als 300% herzustellen.

Die Erfindung geht von der Aufgabenstellung aus, Fällungskieselsäuren mit hoher DBP-Zahl von >300% und gleichzeitig hoher spezifischer Oberfläche von >400 m²/g durch Umsetzung von Alkalisilikatiösungen mit Säure und/oder säureartig wirkenden Stoffen herzustellen. Ein weiteres Ziel der Erfindung ist es, die mit obigen physikalisch-chemischen Kenndaten versehenen Fällungskieselsäuren in verschiedenen, wenn auch gezielt festgelegten Kornverteilungsformen herzustellen.

Tabelle 1

Physikalisch-chemische Kenndaten bekannter Kieselsäuren und Kieselsäuregele mit hoher Struktur und von Kieselsäuren mit normaler Struktur im Vergleich zu den erfindungsgemässen Kieselsäuren

| Physikalisch-chemische Kenngrösse | DE-B 1 467 019 Ultrasil VN 3 | DE-C 2 447 613 Sipernat 22 | DE-C 1 767 332 HK 400 | DE-C 1 036 220 Syloid 244 | US-A 2 249 767 Santocel 62 | Erfindungsgem. Kieselsäuren | | |
|---|---|---|---|---|---|---|---|---|
| | | | | | | Beispiel Nr. 1 | Beispiel Nr. 7 | Beispiel Nr. 9 |
| BET-Oberfläche (DIN 66131) [m²/g] | 170 | 180 | 170 | 330 | 240 | 525 | 520 | 522 |
| DBP-Zahl [%] | 225 | 275 | 285 | 300 | 300 | 380 | 360 | 357 |
| Stampfgewicht (DIN 53194) [g/l] | 200 | 230 | 150 | 95 | 40 | 190 | 92 | 45 |
| «ALPINE-Siebrückstand» > 63 µm [Gew.%] | 6,0 | >75 | <0,01 | <0,01 | <0,01 | 25 | <0,1 | <0,01 |

Gegenstand der Erfindung sind Fällungskieselsäuren, die durch folgende physikalisch-chemische Stoffdaten gekennzeichnet sind:

| BET-Oberfläche nach DIN 66131 | m²/g | 400–600 | 400–600 | 400–600 |
|---|---|---|---|---|
| DBP-Zahl | % | 340–380 | 320–360 | 310–360 |
| Stampfgewicht nach DIN 53194 | g/l | 180–220 | 75–120 | 35– 70 |
| «ALPINE-Siebrückstand» > 63 µm | Gew.% | 25– 60 | <0,1 | <0,01 |

Die physikalisch-chemischen Stoffparameter dieser erfindungsgemässen Fällungskieselsäuren unterscheiden sich somit von denen der höher strukturierten Fällungskieselsäuren und Kieselsäuregele bzw. -aerogele durch höhere BET-Oberflächen in Kombination mit hohen DBP-Zahlen. Je nach Kornverteilungskurve sind diese Fällungskieselsäuren wertvolle, anwendungstechnisch hochwirksame Trägerkieselsäuren für Wirkstoffe aller Art, leistungsfähige Antiblockingmittel für Polypropylen- und Polyäthylenfolien mit sehr guter Transparenz, Verdickungskieselsäuren in bestimmten polaren Systemen, in denen pyrogene Kieselsäuren wenig Verdikkungsleistung zeigen, hochwirksame Mattierungsmittel für Lacke und brauchbare Katalysatorträger sowie Isolationsmaterialien.

Ein weiterer Gegenstand der Erfindung ist ein Verfahren zur Herstellung der erfindungsgemässen Fällungskieselsäuren mit den folgenden aufgeführten physikalisch-chemischen Daten:

| BET-Oberfläche nach DIN 66131 | m²/g | 400–600 | 400–600 | 400–600 |
|---|---|---|---|---|
| DBP-Zahl | % | 340–380 | 320–360 | 310–360 |
| Stampfgewicht nach DIN 53194 | g/l | 180–220 | 75–120 | 35– 70 |
| «ALPINE-Siebrückstand» > 63 µm | Gew.% | 25– 60 | <0,1 | <0,01 |

welches dadurch gekennzeichnet ist, dass man in eine auf 40-42°C erwärmte Vortage aus Wasser unter Konstanthaltung eines pH-Wertes im Bereich von 6-7 durch gleichzeitigen Zulauf von Wasserlösung und Schwefelsäure, unter anhaltendem Scheren mit einer Ekato-Turbine über die gesamte Fällzeit, durch 90minütige Unterbrechung der Fällung von der 13. bis zur 103. Minute nach einer Gesamtfälldauer von 146 Minuten eine Kieselsäureendkonzentration von 46 g/l einstellt, die Fällungskieselsäuresuspension 12-17 Stunden lang altert, die Fällungskieselsäure mit Hilfe einer Filterpresse aus der Suspension abtrennt, auswäscht, den Filterkuchen mit Wasser und/ oder Säure zu einer Suspension mit 10-16 Gew.-% Feststoffgehalt verflüssigt und anschliessend sprühtrocknet.

Die so erhaltene Fällungskieselsäure weist die physikalisch-chemischen Kenndaten gemäss Anspruch 1 auf. Diese Fällungskieselsäure kann mit einer Querstrommühle vermahlen werden. Sie weist dann die physikalischen Kenndaten gemäss Anspruch 3 auf. Wird die Fällungskieselsäure gemäss Anspruch 1 jedoch mittels einer Strahlmühle vermahlen, so weist sie die physikalisch-chemischen Kenndaten gemäss Anspruch 5 auf.

Die besonderen Vorteile des erfindungsgemässen Verfahrens zur Herstellung der erfindungsgemässen Fällungskieselsäuren, die sich günstig auf die Wirtschaftlichkeit des neuen Verfahrens auswirken, sind die folgenden:
– Der im Vergleich zu Fällungskieselsäuren mit hohen spezifischen Oberflächen hohe Feststoffgehalt im Filterkuchen mit 16-17 Gew.-% reduziert die Trocknungskosten und damit den Energiebedarf des Herstellungsverfahrens.
– Die überraschend niedrigen Waschzeiten, die im Vergleich zu Fällungskieselsäuren mit hohen spezifischen Oberflächen bisher nicht beobachtet werden, bewirken, dass der Waschwasserbedarf niedrig ist und eine erhebliche Steigerung der Filterpressenkapazität zu erreichen ist.

Die erfindungsgemässen Kieselsäuren sowie die Verfahren zu ihrer Herstellung werden anhand der folgenden Beispiele näher erläutert und beschrieben:

Beispiel 1

In einem 75-m³-Holzbottich, der als Fällbehälter dient und der mit einem MIG-Balkenrührwerk und einer Ekato-Scherturbine ausgerüstet ist, werden 60 m³ Wasser mit einer Temperatur von 40°C vorgelegt. In diese Vorlage fliessen gleichzeitig mit einer Geschwindigkeit von 9,8 m³/h handelsübliches Wasserglas ($SiO_2$ . 26,8 Gew.-% $Na_2O$ : 8,0 Gew.-%, Modul = 3,35) und konzentrierte Schwefelsäure (96%ig) mit einer Geschwindigkeit von 0,98 m³/h ein. Dabei wird die Säure über die Turbine zugesetzt, die mit Fällungsbeginn in Betrieb gesetzt wird. Während dieser Zugabe wird der pH-Wert der Fällvorlage bei 6,0 gehalten. Nach der 13. Fällminute - d.h. bei sich abzeichnedem Viskositätsanstieg - wird die Zugabe von Wasserglas und Säure für die Dauer von 90 Minuten unterbrochen. Während dieser Unterbrechungsphase wird weiter mit der Ekatoturbine geschert. Ab der 103. Minute wird die Zugabe von Wasserglas unter Einhalten der obengenannten Zugabegeschwindigkeit und des pH-Wertes bis zur 146. Minute fortgesetzt. Der Feststoffgehalt der Fällungssuspension liegt dann bei 46 g/l. Die Temperatur kann je nach äusseren Temperaturbedingungen einer Wert von 42-49°C angenommen haben. Der End-pH-Wert liegt bei 6,0. Insgesamt werden 9,1 m³ Wasserglas und 0,91 m³ Schwefelsäure umgesetzt. Die Suspension wird in einem Zwischenbehälter vor dem Abpressen 15 Stunden lang gealtert. Im Anschluss an diese Alterungsphase wird die Suspension mittels 4 Filterpressen filtriert. Dabei beträgt die Füllzeit bei einem Enddruck von 3,3 bar 1 Stunde. Nach einer sehr kurzen Waschzeit von nur 1,5 Stunden stellt sich ein Leitfähigkeitswert des abfliessenden Filtrats von 1050 µS ein, nach 4 Stunden Waschzeit ein solche von 280 µS. Der Feststoffgehalt des erhaltenen Filterkuchens liegt bei 16,5-17 Gew.-%. Er wird mit Wasser unter Einwirkung von Scherkräften verflüssigt und weist danach einen Feststoffgehalt von 11 Gew.-% auf. Im Anschluss an die Verflüssigung wird die Kieselsäuresuspension mittels einer rotierenden Scheibe zerstäubt und mit heissen Verbrennungsgasen getrocknet.

Die Kenndaten des unvermahlenen Produktes finden sich in Tabelle 2.

Beispiel 2

Eine Fällungskieselsäure wird gemäss Beispiel 1 hergestellt. Dabei wird abweichend von Beispiel 1 die Alterungszeit auf eine Dauer von insgesamt 16 Stunden erhöht, was bei gleicher Strukturmasszahl zu einer herabgesetzten BET-Oberfläche führt.

Die Kenndaten der unvermahlenen Kieselsäure finden sich in Tabelle 2.

Beispiel 3

Die Herstellung der Fällungskieselsäure erfolgt gemäss Beispiel 1. Abweichend wird die Alterungszeit auf 13 Stunden herabgesetzt und gleichzeitig der Feststoffgehalt von 11 auf 13 Gew.-% erhöht.

Die Kenndaten der unvermahlenen Kieselsäure sind der Tabelle 2 zu entnehmen.

Beispiel 4

Es werden die Bedingungen des Beispiels 1 eingehalten. Lediglich der Feststoffgehalt des zur Sprühtrocknung gelangenden verflüssigten Filterkuchens wird auf 12% erhöht.

Die Kenndaten der unvermahlenen Kieselsäure finden sich in Tabelle 2.

Beispiel 5

Die Herstellung dieser Kieselsäure erfolgt gemäss Beispiel 1. Geändert wird nur die Alterungszeit von 15 auf 17 Stunden. Des weiteren wird der Filterkuchen mit wenig verdünnter Schwefelsäure und wenig Wasser verflüssigt und die anfallende Suspension mit einem Feststoff von 16 Gew.-% zur Sprühtrocknung gebracht. Die im Feststoff enthaltene freie Säure wird durch Ammoniakgas neutralisiert.

Die Kenndaten der unvermahlenen Kieselsäure finden sich in Tabelle 2.

Beispiel 6

Die unvermahlene, sprühgetrocknete Kieselsäure des Beispiels 5 wird auf einer ALPINE-Querstrommühle vom Typ UP 630 vermahlen. Es resultiert ein Produkt, dessen physikalisch-chemischen Daten in Tabelle 2 aufgeführt sind.

Beispiel 7

Die gemäss Beispiel 1 erhaltene sprühgetrocknete Fällungskieselsäure wird mittels einer ALPINE-Querstrommühle vom Typ UP 630 vermahlen. Die Daten dieser Kieselsäure befinden sich in Tabelle 2.

Beispiel 8

Die gemäss Beispiel 3 erhaltene unvermahlene, sprühgetrocknete Fällungskieselsäure wird mittels einer ALPINE-Querstrommühle vom Typ UP 630 vermahlen. Die Kenndaten dieser Kieselsäure sind in der Tabelle 2 aufgeführt.

Beispiel 9

Die Kieselsäure des Beispiels 1 wird mittels einer Luftstrahlmühle vom Typ Microgrinding MC 500 vermahlen, dabei wird eine Leistung von 100 kg/h bei einem Mahlluftdruck von 7 bar eingehalten. Die Kenndaten dieser Kieselsäure sind ebenfalls in Tabelle 2 aufgeführt.

Beispiel 10

Die Fällungskieselsäure gemäss Beispiel 5 wird nach Massgabe der Bedingungen des Beispiels 9 luftstrahlvermahlen. Es resultieren Daten, die in Tabelle 2 enthalten sind.

Beispiel 11 (Vergleichsbeispiel)

Dieses Beispiel zeigt die Überlegenheit der erfindungsgemässen Kieselsäuren im Vergleich zu bekannten hochoberflächigen Kieselsäuren anhand der verbesserten Filtrations- und Waschgeschwindigkeit auf Filterpressen.

Gemäss DE-B 15 17 900 (Spalten 2/3, Zeilen 53-68/1-7) wird eine Fällungskieselsäure mit einer spezifischen Oberfläche von 670 $m^2/g$ hergestellt.

Die Daten des Filtrationsvorganges zeigt Tabelle 3.

Dort werden diese Filtrationsdaten den Filtrationsdaten der erfindungsgemässen Kieselsäure gemäss Beispiel 3 gegenübergestellt. Diese weist eine annähernd gleiche Leitfähigkeit, die an der getrockneten Fällungskieselsäure bestimmt wurde, auf.

Das Vergleichsbeispiel zeigt die überraschend hohe Einsparung an Waschwasser und Filterpressenkapazität. Das erfindungsgemässe Verfahren gestattet somit die Herstellung von Fällungskieselsäuren mit hoher Oberfläche zu äusserst wirtschaftlichen Bedingungen.

Die physikatisch-chemischen Stoffdaten wie spezifische BET-Oberfläche, DBP-Zahl und Stampfgewicht werden nach DIN-Methoden bestimmt.

Die Leitfähigkeit in 4%iger wässriger Dispersion wird gemäss DE-A 26 28 975, Seite 16 bestimmt.

Der « ALPINE-Siebrückstand » wurde wie folgt ermittelt:

Zur Bestimmung des Siebrückstandes wird die Kieselsäure durch ein 500 µm-Sieb abgesiebt, um eventuell vorhandene Entlüftungsknoten zu zerstören. Dann werden 10 g des gesiebten Materials auf ein bestimmtes Luftstrahisieb gegeben und bei 200 mm Wassersäule-Unterdruck abgesiebt. Die Siebung ist beendet, wenn der Rückstand konstant bleibt, was meistens am rieselfähigen Aussehen zu erkennen ist. Zur Sicherheit siebt man noch eine Minute länger. Im allgemeinen dauert der Siebvorgang 5 Minuten. Bei eventuell sich bildenden Agglomeraten wird der Siebvorgang kurz unterbrochen und die Agglomerate mit einem Pinsel unter leichtem Druck zerstört. Nach der Siebung wird der Siebrückstand vorsichtig vom Luftstrahlsieb abgeklopft und zurückgewonnen.

Tabelle 2
Physikalisch-chemische Kenndaten der gemäss Beispielen 1–10 hergestellten Fällungskieselsäuren

| Physikalisch-chemische Kenngrösse | Beispiele-Nr. | | | | | | | | | |
|---|---|---|---|---|---|---|---|---|---|---|
| | 1* | 2* | 3* | 4* | 5* | 6** | 7** | 8** | 9*** | 10*** |
| BET-Oberfläche DIN 66131 [$m^2/g$] | 525 | 460 | 595 | 525 | 418 | 411 | 520 | 590 | 522 | 415 |
| DBP-Zahl DIN 53601 [%] | 380 | 378 | 362 | 372 | 346 | 331 | 360 | 355 | 357 | 322 |
| Stampfgewicht DIN 53194 [g/l] | 190 | 190 | 196 | 200 | 203 | 100 | 92 | 94 | 45 | 52 |
| «ALPINE-Siebrückstand» > 63 µm [Gew.%] | 25 | 26 | 60 | 56 | 54 | <0,1 | <0,1 | <0,1 | <0,01 | <0,01 |

\* unvermahlene Kieselsäure
\*\* ALPINE-Querstrommühle – vermahlene Kieselsäure
\*\*\* Luftstrahlmühle – vermahlene Kieselsäure

EP 0 078 909 B2

Tabelle 3

Filtration und Waschvorgang von hochoberflächigen Kieselsäuren gemäss DE-B 1 517 900 und erfindungsgemässer Kieselsäure

| Parameter | Fällungskieselsäure gemäss DE-AS 1 517 900 | Erfindungsgemässe Fällungskieselsäure nach Beispiel 3 |
|---|---|---|
| Spezifische Oberfläche m²/g | 670 | 595 |
| Füllzeit der Filterpresse, Stunden | 3 | 1,5 |
| Waschzeit, Stunden | 36 | 1,5 |
| Filterkuchen-Feststoffgehalt Gew.% | 16 | 16,5 |
| Leitfähigkeit der trockenen Kieselsäure µS (in 4%iger wässriger Phase) | ca. 800 | ca. 1000 |

## Patentansprüche

1. Fällungskieselsäure, gekennzeichnet durch die folgenden physikalisch-chemischen Kenndaten:

| | | |
|---|---|---|
| BET-Oberfläche nach DIN 66131 | m²/g | 400–600 |
| DBP-Zahl nach DIN 53601 | % | 340–380 |
| Stampfgewicht nach DIN 53194 | g/l | 180–220 |
| «ALPINE-Siebrückstand» > 63 µm | Gew.% | 25– 60 |

2. Verfahren zur Herstellung der Fällungskieselsäuren mit den folgenden physikalisch-chemischen Kennda-ten:

| | | |
|---|---|---|
| BET-Oberfläche nach DIN 66131 | m²/g | 400–600 |
| DBP-Zahl nach DIN 53601 | % | 340–380 |
| Stampfgewicht nach DIN 53194 | g/l | 180–220 |
| «ALPINE-Siebrückstand» > 63 µm | Gew.% | 25– 60 |

dadurch gekennzeichnet, dass man in eine auf 40°C-42°C erwärmte Vorlage aus Wasser unter Konstanthaltung eines pH-Wertes im Bereich von 6-7 durch gleichzeitigen Zulauf von Wasserglaslösung und Schwefelsäure, unter anhaltendem Scheren über die gesamte Fällzeit, durch 90minütige Unterbrechung der Fällung von der 13. bis zur 103. Minute nach einer Gesamtfälldauer von 146 Minuten eine Kieselsäu-reendkonzentration von 46 g/l einstellt, die Fällungskieselsäuresuspension 12-17 Stunden lang altert, die Fällungskieselsäure mit Hilfe einer Filterpresse aus der Suspension abtrennt, auswäscht, den Filterkuchen mit Wasser und/oder Säure zu einer Suspension mit 10-16 Gew.% Feststoffgehalt verflüssigt und anschliessend sprühtrocknet.

3. Fällungskieselsäure, gekennzeichnet durch die folgenden physikalisch-chemischen Kenndaten:

| | | |
|---|---|---|
| BET-Oberfläche nach DIN 66131 | m²/g | 400–600 |
| DBP-Zahl nach DIN 53601 | % | 320–360 |
| Stampfgewicht nach DIN 53194 | g/l | 75–120 |
| «ALPINE-Siebrückstand» > 63 µm | Gew.% | < 0,1 |

4. Verfahren zur Herstellung der Fällungskieselsäure mit den folgenden physikalisch-chemischen Kennda-ten:

6

| BET-Oberfläche nach DIN 66131 | m²/g | 400–600 |
|---|---|---|
| DBP-Zahl nach DIN 53601 | % | 320–360 |
| Stampfgewicht nach DIN 53194 | g/l | 75–120 |
| «ALPINE-Siebrückstand» > 63 µm | Gew.% | <0,1 |

dadurch gekennzeichnet, dass man nach Anspruch 2 verfährt und die Fällungskieselsäure im Anschluss an die Sprühtrocknung auf einer ALPINE-Querstrommühle vermahlt.

5. Fällungskieselsäure, gekennzeichnet durch die folgenden physikalisch-chemischen Kenndaten:

| BET-Oberfläche nach DIN 66131 | m²/g | 400–600 |
|---|---|---|
| DBP-Zahl nach DIN 53601 | % | 310–360 |
| Stampfgewicht nach DIN 53194 | g/l | 35– 70 |
| «ALPINE-Siebrückstand» > 63 µm | Gew.% | <0,01 |

6. Verfahren zur Herstellung der Fällungskieselsäure mit folgenden physikalisch-chemischen Kenndaten:

| BET-Oberfläche nach DIN 66131 | m²/g | 400–600 |
|---|---|---|
| DBP-Zahl nach DIN 53601 | % | 310–360 |
| Stampfgewicht nach DIN 53194 | g/l | 35– 70 |
| «ALPINE-Siebrückstand» > 63 µm | Gew.% | <0,01 |

dadurch gekennzeichnet, dass man nach Anspruch 2 verfährt und die Fällungskieselsäure im Anschluss an die Sprühtrocknung auf einer Strahlmühle vermahlt.

## Claims

1. Precipitated silica, characterised by the following physical-chemical characteristic data:

| BET surface according to DIN 66131 | m²/g | 400–600 |
|---|---|---|
| DBP number according to DIN 53601 | % | 340–380 |
| tamped density according to DIN 53194 | g/l | 180–220 |
| «ALPINE sieve residue» > 63 µm | % by weight | 25– 60 |

2. A process for the production of precipitated silica with the following physical-chemical characteristic data:

| BET surface according to DIN 66131 | m²/g | 400–600 |
|---|---|---|
| DBP number according to DIN 53601 | % | 340–380 |
| tamped density according to DIN 53194 | g/l | 180–220 |
| «ALPINE sieve residue» > 63 µm | % by weight | 25– 60 |

characterised in that a receiver of water is heated to from 40°C to 42°C, and a pH in a range from 6 to 7 is maintained by simultaneous addition of water glass solution and sulphuric acid, with continuous shearing over the total precipitation time, with a 90-minute interruption of the precipitation from the 13th to the 103rd minute, and after a total precipitation time of 146 minutes a final silica concentration of 56 g/l is established, the precipitated silica suspension is aged for from 12 to 17 hours, the precipitated silica is separated from the suspension by means of a filter press, rinsed, the filter cake is diluted with water and/or acid to a suspension having a solids content of from 10 to 16% by weight and then spray-dried.

3. Precipitated silica, characterised by the following physical-chemical characteristic data:

| BET surface according ton DIN 66131 | m²/g | 400–600 |
|---|---|---|
| DBP number according to DIN 53601 | % | 320–360 |
| tamped density according to DIN 53194 | g/l | 75–120 |
| «ALPINE sieve residue» > 63 µm | % by weight | <0.1 |

4. A process for the production of precipitated silica with the following physical-chemical characteristic data:

| | | |
|---|---|---|
| BET surface according ton DIN 66131 | m²/g | 400–600 |
| DBP number according to DIN 53601 | % | 320–360 |
| tamped density according to DIN 53194 | g/l | 75–120 |
| «ALPINE sieve residue» > 63 μm | % by weight | < 0.1 |

characterised in that the procedure is in accordance with claim 2 and the precipitated silica is ground on an ALPINE cross-flow mill subsequent to being spray-dried.

5. Precipitated silica, characterised by the following physical-chemical characteristic data:

| | | |
|---|---|---|
| BET surface according to DIN 66131 | m²/g | 400–600 |
| DBP number according to DIN 53601 | % | 310–360 |
| tamped density according to DIN 53194 | g/l | 35– 70 |
| «ALPINE sieve residue» > 63 μm | % by weight | < 0.01 |

6. A process for the production of precipitated silica with the following physical-chemical characteristic data:

| | | |
|---|---|---|
| BET surface according to DIN 66131 | m²/g | 400–600 |
| DBP number according to DIN 53601 | % | 310–360 |
| tamped density according to DIN 53194 | g/l | 35– 70 |
| «ALPINE sieve residue» > 63 μm | % by weight | < 0.01 |

characterised in that the procedure is in accordance with claim 2 and the precipitated silica is ground on a jet mill subsequent to being spray-dried.

## Revendications

1. Acide silicique de précipitation, caractérisé par les données physico-chimiques suivantes:

| | | |
|---|---|---|
| Surface BET selon DIN 66131 | m²/g | 400–600 |
| Indice DBP selon DIN 53601 | % | 340–380 |
| Densité apparente selon DIN 53194 | g/l | 180–220 |
| Refus du tamis «ALPINE» > 63 μm | % en poids | 25– 60 |

2. Procédé pour la préparation de l'acide silicique de précipitation ayant les caractéristiques physico-chimiques suivantes:

| | | |
|---|---|---|
| Surface BET selon DIN 66131 | m²/g | 400–600 |
| Indice DBP selon DIN 53601 | % | 340–380 |
| Densité apparente selon DIN 53194 | g/l | 180–220 |
| Refus du tamis «ALPINE» > 63 μm | % en poids | 25– 60 |

caractérisé par le fait que, dans un récipient contenant de l'eau chauffée à 40-42°C, en maintenant constamment le pH à une valeur comprise entre 6 et 7 par addition simultanée de solution de verre soluble et d'acide sulfurique, en agitant continuellement avec cisaillement pendant toute la durée de la précipitation, en interrompant pendant 90 minutes la précipitation de la 13ème à la 103ème minute, après une durée de précipitation totale de 146 minutes, on amène une concentration finale d'acid silicique de 46 g/l, on fait vieillir 12-17 heures la suspension d'acide silicique précipité, on sépare de la suspension l'acide silicique précipité à l'aide d'un filtre-presse, le lave, délaye le gâteau avec de l'eau et/ou de l'acide en une suspension ayant une teneur matière solide de 10-16% en poids, et ensuite séché par atomisation.

3. Acide silicique de précipitation, caractérisé par les données physico-chimiques suivantes:

| | | |
|---|---|---|
| Surface BET selon DIN 66131 | m²/g | 400–600 |
| Indice DBP selon DIN 53601 | % | 320–360 |
| Densité apparente selon DIN 53194 | g/l | 75–120 |
| Refus du tamis «ALPINE» > 63 µm | % en poids | < 0,1 |

4. Procédé pour la préparation d'acide silicique de précipitation ayant les caractéristiques physico-chimiques suivantes:

| | | |
|---|---|---|
| Surface BET selon DIN 66131 | m²/g | 400–600 |
| Indice DBP selon DIN 53601 | % | 320–360 |
| Densité apparente selon DIN 53194 | g/l | 75–120 |
| Refus du tamis «ALPINE» > 63 µm | % en poids | < 0,1 |

caractérisé par le fait que l'on procède suivant la revendication 2 et que l'on broie l'acide silicique de précipitation sur un broyeur à courant transversal ALPINE, à la suite du séchage par atomisation.

5. Acide silicique de précipitation, caractérisé par les données physico-chimiques suivantes:

| | | |
|---|---|---|
| Surface BET selon DIN 66131 | m²/g | 400–600 |
| Indice DBP selon DIN 53601 | % | 310–360 |
| Densité apparente selon DIN 53194 | g/l | 35– 70 |
| Refus du tamis «ALPINE» > 63 µm | % en poids | < 0,01 |

6. Procédé pour la préparation de l'acide silicique de précipitation ayant les caractéristiques physico-chimiques suivantes:

| | | |
|---|---|---|
| Surface BET selon DIN 66131 | m²/g | 400–600 |
| Indice DBP selon DIN 53601 | % | 310–360 |
| Densité apparente selon DIN 53194 | g/l | 35– 70 |
| Refus du tamis «ALPINE» > 63 µm | % en poids | < 0,01 |

caractérisé par le fait que l'on procède suivant la revendication 2 et que l'on broie l'acide silicique de précipitation, à la suite du séchage par atomisation, sur un broyeur à projection.